# EUROPEAN PATENT SPECIFICATION

(11) **EP 1 871 843 B1**
(45) Date of publication and mention of the grant of the patent: **07.09.2011**
(21) Application number: 06741401.1
(22) Date of filing: 20.04.2006
(51) Int. Cl.: C09D 1/00, C04B 35/56, C04B 35/04, C04B 35/58

(54) **WEAR RESISTANT CERAMIC COMPOSITE COATINGS AND PROCESS FOR PRODUCTION THEREOF**
VERSCHLEISSFESTE KERAMISCHE VERBUNDÜBERZÜGE UND HERSTELLUNGSVERFAHREN DAFÜR
REVÊTEMENTS COMPOSITES CÉRAMIQUES RÉSISTANT À L'USURE ET LEURS PROCÉDÉS DE PRODUCTION

(30) Priority: 21.04.2005 CA 2504831
(43) Date of publication of application: 02.01.2008
(73) Proprietor: Standard Aero Limited, Winnipeg, Manitoba R3H 1A1 (CA)
(72) Inventor: SHANKER, Kartik c/o STANDARD AERO LIMITED, Winnipeg, Manitoba R3H 1A1 (CA); KRAJ, Andrea Grazyna c/o STANDARD AERO LIMITED, Winnipeg, Manitoba R3H 1A1 (CA)
(74) Representative: Heim, Hans-Karl
(86) International application number: PCT/CA2006/000635
(87) International publication number: WO 2006/111025

(56) References cited:
- EP-A- 0 303 205
- WO-A-01/71727
- CA-A1- 2 286 023
- CA-A1- 2 401 313
- DE-A1- 4 221 318
- GB-A- 2 015 498
- JP-A- 07 187 817
- JIANSIRISOMBOON S. ET AL.: 'Low pressure plasma-sprayed Al2O3 and Al2O3/SiC nanocomposite coatings from different feedstock powders' J. EUR. CER. SOC. vol. 23, 2003, pages 961 - 976, XP004402758
- CHEN D. ET AL.: 'Study on aluminium phosphate binder and related Al2O3-SiC ceramic coating' MAT. SCI. AND ENG. A vol. 348, no. 1-2, 15 May 2003, pages 29 - 35, XP003003533
- WANG J.-J. ET AL.: 'SHS Flame Spraying TiC-TiB2 Multiphase Coatings' TRANSACTIONS OF MATERIALS AND HEAT TREATMENT, PROCEEDINGS OF THE 14TH CONGRESS vol. 25, no. 5, 2004, pages 981 - 983, XP008071856

## Description

### FIELD OF THE INVENTION

The present invention relates to a ceramic composite for use in applications on target surfaces, and the process for production of the ceramic composite.

### BACKGROUND OF THE INVENTION

Protective surface coatings typically possess properties including extremely high hardness and wear resistance characteristics. Ceramics are attractive candidate materials for use in such coatings. Unfortunately, the wide use of pure ceramics in coatings has been frustrated due to the generally poor mechanically bonding capabilities observed when ceramics are applied to surfaces.

Previous efforts to increase the cohesive and adhesive strength of ceramics revealed that these particles must be softened or melted before use in coatings. Without such pre-treatment, the ceramics may not bond, and may simply bounce off the target surface in a manner resembling a grit or sand blasting process.

The desired softening, or in some cases, melting, is generally obtained by pre-heating the ceramics at high temperatures until the softening temperature is reached. At this temperature, the viscous flow becomes plastic flow. Unfortunately, many ceramics, including some carbides, borides, and nitrides, decompose at high temperatures and cannot be pre-treated in this manner.

Although carbides and borides that generally retain their stability at higher temperatures are also known, the degree to which these compounds soften during pre-heating is limited. Examples of such carbides and borides include silica carbide, chromium carbide, boron carbide, titanium boride, zirconium boride, and hafnium boride.

Fortunately, some substantially pure ceramic oxides will soften at higher temperatures without substantial degradation. The use of ceramics for coating depositions has been generally limited to this group.

The deposition of ceramic oxides is typically provided using thermal spraying processes known in the field, which permit rapid deposition of a wide range of ceramics, composites, metals, and polymers onto target surfaces. In these processes, the subject particles are first softened or melted, then projected towards the target surface where it bonds to form a coating. Processes that can be used include atmospheric plasma spraying (APS), flame combustion spraying (FCS), low pressure or vacuum plasma spraying (LPPS) and electric wire arc spraying. In some instances, further heat treatment is introduced to increase the cohesive and adhesive strength of the coating.

Unlike ceramic oxides, pure non-oxide ceramic coatings have typically been used in only limited applications. Even there, problems persist. Where thermal spraying is used, a metallic matrix must first be added to the ceramic before application, and the ceramic is deposited as a secondary phase in the composite. While somewhat substantial coating deposits can be achieved, use at high temperatures is limited. This is because the desired temperature resistance is reduced by degradation of the metallic phase of the ceramic-metallic matrix composite when high temperatures are reached.

Where thermal spraying is not used, pure non-oxide ceramic coatings can be deposited on target surfaces by other means. Examples include CVD (Chemical Vapour Deposition) and PVD (Physical Vapour Deposition). Again, problems arise. The ceramic particles are generally applied as a very thin film, rather than in dispersion. These techniques can also be slow.

Non-oxide ceramics can also be deposited by 'painting' the target surface of the part with a mixed slurry, then heating it to high temperatures. However, the usefulness of such slurry processes is also somewhat limited because some parts cannot withstand the high temperatures required. In addition, thicker coatings, cannot be applied with the slurries unless labour-intensive, expensive multi-step processes are used.

GB-A-2 015 498 discloses a heat resistant ceramic body being produced by mixing 0.01 to 15 weight-% of a polyborosiloxane containing phenyl groups in side chains of silicon with a polysilane and polymerising the mixture to form polycarbosilane partly containing siloxane bonds, mixing the product up to 20% with a ceramic powder and sintering the mix after forming to a desired shape by heating at 800 to 2000 °C in a non-oxidizing atmosphere. The ceramic powder is an oxide, carbide, boride, nitride or silicide. The ceramic body may be used as building materials, as aircraft components, motor car parts and for the manufacture of machine parts.

WO 01/71727 A discloses a method for producing agglomerated boron carbide, which includes the steps of providing a boron carbide powder precursor having particle sizes smaller than about 1 micron in diameter, mixing the boron carbide powder precursor with a binder solution to form a slurry, drying the slurry to yield a solid residue, crushing the solid residue to yield green boron carbide particles, and firing the green boron carbide particles. The resulting agglomerated boron carbide particles have diameters generally ranging from about 5 to about 30 microns. The agglomerated boron carbide particles are characterized as boron carbide grains of about 1 to 2 microns in diameter suspended in a vitreous boron oxide matrix.

DE 42 21 318 A1 discloses a silicon carbide carbon composite material with silicon carbide powder of 19 weight-% purity and less than 5 µm average particle size, condensed polycyclic aromatic compound and polymerized condensed aromatic compounds and 0.1 to 10 weight-% of sintering agent powder such as alumina being mixed therein. This mixture is calcined at 300 to 600 °C in an inert atmosphere and molded by granulation molding. The molded body is sintered at 1200 to 2300 °C in vacuum or the like for 0.5 to 8 hours to obtain a silicon carbide carbon composite material.

EP-A-0 303 205 discloses a sintered ceramic dull roll for rolling mill essentially consisting of 50 to 80 vol.-% of a first ingredient such as silicon carbide, silicon nitride, sialon, alumina and zirconia and 20 to 50 vol.-% of a second ingredient such as the carbides, nitrides and borides of transition elements of the groups IVa, Va and VIa of the periodic table, and having a density of not less than 96% of theoretical density, the first and second ingredients are so selected that the difference in the Young's modulus between the first and second ingredients is not more than 2 million bar, the amount of the second ingredient is further so selected that the electric resistivity of the sintered ceramic dull roll is not more than 1 x 10⁻² Ωcm and the surface of the roll has a uniform surface roughness of not less than 6 µm.

CA-A-2286023 discloses a composition for plasma spraying with 50% to 90% by weight of a cemented carbide matrix comprising tungsten carbide or chromium carbide and 5% to 50% by weight of a ceramic dispersion comprising either a mixture of aluminum oxide and titanium oxide or chromium oxide. The cemented carbide matrix comprises cobalt, which is used to bind the carbide particles.

The state of the art would benefit greatly if formulations and processes were available to controllably coat target surfaces with both oxide and non-oxide ceramics without degradation of the coating components or the underlying parts.

### SUMMARY OF THE INVENTION

Accordingly, it is an object of the present invention to provide a process for producing ceramic coatings comprising borides and/or carbides. It is also an object of the invention to provide products or compositions for producing such ceramic coatings, the coatings having controllable thickness and relatively high concentration of non-oxide ceramic particles.

In accordance with one aspect of the invention, there is provided a method for coating a surface of an article with a ceramic coating comprising a boride ceramic or a carbide ceramic, the method comprising contacting the surface with a feedstock at a temperature and for a time sufficient for the feedstock to form a uniform coating on the surface, the feedstock comprising a) a boride ceramic powder, a carbide ceramic powder or both, and b) an oxide ceramic powder, the composition of the feedstock selected so that said coating comprises an oxide matrix and at least 15 percent of at least one of said boride ceramic or said carbide ceramic per volume of said coating, dispersed in said oxide matrix.

In accordance with another aspect of the invention, there is provided a method of preparing a feedstock for thermal spraying on a surface to create a ceramic coating thereon, the method comprising mixing an oxide ceramic powder with one of a carbide ceramic powder, a boride ceramic powder or a combination thereof, the content of the mixture and the mixing conditions selected to produce, when the feedstock is subsequently thermally sprayed onto the surface at a predetermined temperature and for a predetermined time, a coating comprising at least 15 percent by volume of a ceramic other than the oxide ceramic.

In accordance with a further aspect of the invention, there is provided a feedstock composition for thermal spraying on a surface of an article, the composition containing i) an oxide ceramic powder and ii) a boride ceramic powder, a carbide ceramic powder or a combination thereof, the content of the boride ceramic powder, carbide ceramic powder or their combination being such that upon thermal spraying of the composition onto an article, the amount of the boride ceramic, carbide ceramic or both is at least 15 percent by volume of the coating.

### BRIEF DESCRIPTION OF THE DRAWINGS

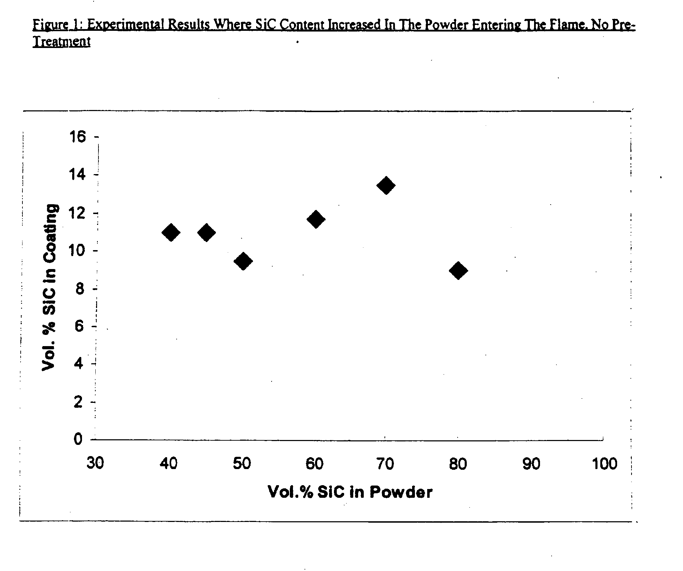

Figure 1 illustrates the concentration of silicon carbide in a coating produced according to prior art.

### DETAILED DESCRIPTION OF THE INVENTION

The invention encompasses a ceramic powder pre-treatment process wherein a ceramic oxide powder is combined with ceramic non-oxide powder prior to thermal spraying. The resulting ceramic feedstock can be used as a pre-feed for co-spraying with another ceramic oxide or it can be sprayed directly onto a substrate. Deposition of the feedstock provides surface coatings with elevated and controllable concentrations of non-oxide ceramics for an increased range of applications.

The ceramic feedstock or pre-feed includes a ceramic oxide powder and a carbide and/or boride ceramic powder. The oxide or oxides can be one or more of the group including alumina, alumina-titania, zirconia, yttria-stabilized zirconia, magnesia-stabilized zirconia, ceria-stabilized zirconia, calcia-stabilized zirconia, scandia-stabilized zirconia, zirconia toughened alumina, alumina-zirconia, or a compound oxide. Compound oxides are those that include two or more compounds from the group consisting of oxides of aluminum, chromium, iron, and titanium.

The particle size of the oxides used according to the invention is preferably not more than about 45 micrometers, and the volume content of the oxides in the ceramic feedstock or pre-feed according to the invention is in the range from about 1 to about 85 percent.

Preferably, the carbide for the purpose of the invention is one or more from the group including silicon carbide, chromium carbide, and boron carbide. Other carbides such as carbides of elements from groups IVB, VB, VIB, and VIIB of the periodic table and iron carbide can also be used.

Preferably, the borides can be one or more of the group including titanium boride, zirconium boride, and hafnium boride. Other borides such as borides of elements from groups IVB, VB, VIB, VIIB and VIIIB can also be used.

The particle size of the carbides and/or borides is in the range of up to about 106 micrometers. The preferred size for uniform wear properties is in the range from about 10 to about 45 micrometers.

The amount of ceramic oxide powder in the feedstock or pre-feed may vary widely depending on the desired content of the non-oxide ceramic in the resulting coating. According to the invention, the content of the oxide ceramic in the feedstock (fed into the thermal spray torch) is in the range from about 1 percent to about 85 percent by volume of the feedstock, and preferably in the range from about 30 percent to 60 percent by volume.

Two approaches are proposed to prepare the feedstock for spraying, aside from the type of mixing described below. The approaches may be used with dry mixing, wet mixing or both. In the first approach, a non-oxide ceramic (i.e. a carbide, boride or both) is premixed with less than 45 micrometer oxide or oxides to provide an oxide content in the range from about 1 to about 25 percent by volume. This is followed by mechanical mixing with additional oxides of identical or different chemistry and optionally different particle sizes, optionally coarser than about 45 micrometers, to provide an oxide content up to a limit of about 85 percent by volume. Thus the mixing step is realized in two substages.

In the second approach, a non-oxide ceramic or ceramics as above is mixed with less than 45 micrometer oxide(s), with the oxide content up to a limit of about 85 percent by volume, with no further oxide addition. In the second approach, it is preferable that no oxide with particle size greater than about 45 micrometers is added.

Based on the experiments conducted to validate the invention, the volume of the carbides and/or borides in the coating resulting from the spraying of the above feedstock can be in the range of from about 15 to about 85 percent, typically from about 15 to about 70 percent. This large component of carbides and/or borides by volume is achieved in the coating owing to the pre-treatment processing of the carbides and/or borides with specific oxides. The porosity of the coatings can be controlled, in a manner known to those skilled in the art, in a range from less than 1 percent to about 20 percent by volume, with low porosity preferred for high wear applications.

The pre-treatment process includes mechanical dry mixing or wet mixing of the carbide and/or boride ceramic powder with an oxide ceramic powder. In the wet mixing, a slurry may be formed, followed by drying, for example spray drying to produce a dry mix. Some illustrative examples follow.

In one embodiment of the pre-treatment process, dry-mixing is used. Carbide or boride particles are dry-mixed mechanically with either oxides listed above or silica powder, the oxides having particle size less that 45 micrometers. The oxide content in the mix according to the invention ranges from about 1 percent up to about 85 percent by volume, with a preferred oxide content in the range from about 30 to about 60 percent by volume. Oxide diameter sizes range up to about 1 micrometer, and a diameter of greater than 0.01 micrometers is preferred in order to prevent poor sprayability properties in the dry mix. Particle size distribution of the pre-treated particles in the resulting ceramic feedstock or pre-feed is suitable for application with thermal spraying processes.

In another embodiment of the pre-treatment process, a wet-mix method is used. Carbide or boride particles are wet-mixed with either oxides listed above or silica, to form either an aqueous or non-aqueous slurry. An aqueous slurry is preferred, but the liquid content is not important and will depend on the desired mix viscosity. Again, the oxide powder particle size should preferably be less than about 45 micrometers, preferably less than 1 micrometer. Nanosized powder particles can be used in the slurry, however, the finer the oxide powder, the more sensitive the feedstock to the presence of moisture. Moisture may make the mix difficult to thermally spray. The content of oxide ceramic powder in the wet-mixing approach is from about 1 percent to about 85 percent by volume of the dry components, i.e. similar as in the dry mixing step.

The wet mix is dried, for example by spray drying, into particles with a mean size and size distribution suitable for thermal spraying, typically in the range from about 30 to about 108 micrometers. The method does not require a binder requiring high temperature sintering. However, binders that can be burnt out during oven drying or during spraying can be used. For example, a small amount of binder, e.g. 0.1 percent polyvinyl alcohol (PVA) may be used. The use of dispersants and other slurry stabilizers is permitted but is not preferred unless the stabilizers are readily evaporated or decomposed into volatiles during drying or thermal spraying, and preferably before the powder reaches the target during thermal spraying.

Oxide diameter sizes should preferably be less than about 45 micrometers, and preferably less than 1 micrometer. This wet mix is dried, and particle size distribution of the pre-treated particles in the resulting ceramic feedstock pre-feed is again in the range from about 30 to about 108 micrometers for ease of application. Next, the mix is sprayed in the manner noted above for the dry mix in the first example.

After the pre-treatment process is performed, the resulting dry ceramic powder composition can be thermally sprayed, mixed with another powderto form a secondary feedstock or co-injected (co-deposited) with another oxide ceramic powder in the course of thermal spraying on the target article to form a coating thereon. The feedstocks are deposited by atmospheric plasma spraying in air or inert gas shielded (e.g., APS), low pressure (orvacuum) plasma spraying (e.g., LPPS), flame combustion spraying (FCS) and other thermal spray processes, as are known in the field.

It was found that concentrations of non-oxide ceramics in coatings applied from feedstock derived in the above-described manner are higher than concentrations of non-oxide ceramics in coatings applied from conventional powder feed. Comparative Example 1 illustrates the conventional approach.

### EXAMPLE 1 (Comparative)

In this example, silicon carbide was selected as the carbide, sized at less than 70 micrometers, and stored in a first hopper. Alumina was chosen as the oxide, sized at less than 75 micrometers, and stored in a second hopper. The carbide and oxide were co-injected into an APS torch from the two separate hoppers and deposited on grit-blasted stainless steel substrates. Multiple passes were provided until a nominal thickness of 250 micrometers was achieved in the coating. The objective of the experiment was to determine whether high amounts of silicon carbide could be obtained in the coating, without first pre-treating the silicon carbide.

Several tests were performed with a range of powder feed rates that varied the fractional amounts of silicon carbide in the APS torch flame. The volume percentage of silicon carbide in the plasma torch was varied between 40, 45, 50, 60, 70 and 80 percent by volume, and the remaining component used in the torch was alumina in each test. The results are provided in Figure 1.

The maximum volume fraction of silicon carbide deposited in the coating, 13.5 percent, was obtained when the SiC content in the flame was 70 percent by volume. The deposition rate decreased rapidly when the silicon carbide content in the flame increased above 70 percent by volume. The number of passes required to provide the nominal coating of 250 mircrometers when the silicon carbide was set to 80 percent by volume was more than twenty times the number of passes required to attain that coating thickness when the silicon carbide volume in the flame was set at 40 percent by volume.

The results from Example 1 demonstrate poor net deposition efficiency obtained when conventional feed is used. As shown, simply increasing the silicon carbide content of the powder entering the flame will not produce coatings with high silicon carbide content (i.e., greater than 15 percent by volume). Grit blasting of the surface by the hard silica carbide may be one contributing factor to this result.

Examples 2 to 6 are described next to demonstrate that coatings with carbide and boride concentrations greater than 15 percent by volume can be obtained when the feedstock used is derived from carbide and boride particles pre-treated with an oxide matrix prior to deposition.

### EXAMPLE 2

In this example, an aqueous slurry containing 98.5 percent silicon carbide by weight was prepared containing 80 millilitres of water per 100 grams of less than 70 micrometer (220 mesh) silicon carbide powder. In a pre-treatment process, the slurry was mixed with sub-micron sized oxides of cobalt and aluminium. After wet mixing for 30 minutes and drying for 1.5 hours at 149 degrees C (300 degrees F), the dried mix was tumbled to de-agglomerate. The resulting ceramic feedstock pre-feed was then co-injected with less than 75 micrometer alumina (200 mesh) into an APS torch and deposited on grit-blasted stainless steel substrates. The volume fraction of the treated silicon carbide in the flame was 70 percent by volume. Multiple passes were provided until a nominal thickness of 250 mircrometers was achieved in the coating. Evaluation of the coating revealed a silicon carbide concentration of 38 percent with porosity less than 5 percent by volume.

### EXAMPLE 3

In this example, less than 45 micrometer silicon carbide powder was dry mixed in a tumbler with 0.05 micrometer alumina, with the mixture containing 70 percent by weight silicon carbide. After tumble mixing for 90 minutes, the resulting ceramic powder mixture (pre-feed) was co-injected into an APS torch with less than 75 micrometer alumina and deposited on grit-blasted stainless steel substrates. The volume fraction of the treated silicon carbide in the flame was 40 percent by volume. Multiple passes were provided until a nominal thickness of 250 micrometers was achieved in the coating. Evaluation of the coating revealed a silicon carbide concentration of 67 percent with porosity less than 5 percent by volume.

### EXAMPLE 4

In this example, less than 70 micrometer silicon carbide powder was dry-mixed with 0.05 micrometer alumina, with the mixture containing 70 percent by weight silicon carbide. After tumble mixing for 90 minutes, the resulting ceramic powder mixture was co-injected into an APS torch with less than 75 micrometer alumina and deposited on grit-blasted stainless steel substrates. The volume fraction of the treated silicon carbide in the flame was 40 percent by volume. Multiple passes were provided until a nominal thickness of 250 micrometers was achieved in the coating. Evaluation of the coating revealed a high silica carbide concentration of 47 percent by volume, a quantity lower than the concentration previously reported in Example 3, with the same porosity as in Example 3.

### EXAMPLE 5

In this example, less than 70 micrometer silicon carbide powder was dry-mixed with less than 45 micrometer silica, with the mixture containing 90 percent by weight silicon carbide. After tumble mixing for 90 minutes, the resulting ceramic feedstock was co-injected into an APS torch with less than 75 micrometer alumina and deposited on grit-blasted stainless steel substrates. The volume fraction of the treated silicon carbide in the flame was 40 percent. Multiple passes were provided until a nominal thickness of 250 micrometers was achieved in the coating. Evaluation of the coating revealed a silicon carbide concentration of 56 percent with porosity less than 5 percent by volume.

A summary of some of the salient parameters from the examples 1 to 5 is provided at Table 1 below.

**Table 1: Summary of Examples 1 to 5**

| Example | Pre-Treatment Process | SiC (wt %) in Pre-Feed | Feedstock Deposition Process | SiC (vol. %) in Feed | Maximum SiC (vol. %) in Coating |
|---|---|---|---|---|---|
| 1 | none | n/a | APS | 70 | 13.5 |
| 2 | wet mix | 98.5 | APS | 70 | 38 |
| 3 | dry mix | 70 | APS | 40 | 67 |
| 4 | dry mix | 70 | APS | 40 | 47 |
| 5 | dry mix | 90 | APS | 40 | 56 |

These examples illustrate a clear improvement in the concentration of the non-oxide ceramic in the coating when the feedstock is prepared by pre-mixing the oxide ceramic powder with the non-oxide ceramic powder as defined above. The experiments indicate that the carbide and/or boride content in the coating can be controlled in a range from about 15 to about 70 percent by volume when the feedstock preparation process according to the invention is used.

### EXAMPLE 6

Titanium diboride powder -45/+10 micrometers was dry mixed with 0.3 micrometers Al₂O₃ in a tumbler for two hours in the following ratios:
1) TiB₂ : Al₂O₃ = 1.0 : 0.3040 (by weight)
2) TiB₂ : Al₂O₃ = 1.0 : 0.2565
3) TiB₂ : Al₂O₃ = 1.0: 0.3040

These pre-treated powders were subsequently mixed with coarser -45/+11 micrometers Al₂O₃ powder by manually shaking for 15 to 30 seconds just prior to loading in the powder hopper. The fractional contents of TiB₂ and Al₂O₃ (fine + course) in the final mixtures were as follows:
1) 37 volume percent TiB₂, 63 percent Al₂O₃
2) 50 volume percent TiB₂, 50 percent Al₂O₃
3) 50 volume percent TiB₂, 50 percent Al₂O₃

The mixture was injected into an APS torch (Sulzer Metco 9MB torch, 500A, 75V) and deposited using multiple passes, until a nominal thickness of 250 micrometers was achieved (on grit blasted stainless steel). Evaluation of the coatings gave the following results:
1) 35.4 volume percent TiB₂, 64.6 percent Al₂O₃
2) 38.6 volume percent TiB₂, 61.4 percent Al₂O₃
3) 44.3 volume percent TiB₂, 55.7 percent Al₂O₃

These results demonstrate that oxide coatings with relatively high volume fractions of borides can be deposited using the procedures of the invention. Also, the amount of boride can be controlled by using different relative amounts in the pre-treated powders and/or changing the amount of the coarser oxide fraction.

Coatings with porosity content ranging from less than about 1 percent to about 20 percent by volume can be deposited using thermal spraying, although low porosity is preferred for high wear applications. The coating thickness can also be controlled in the range of from about 0.02 millimeters to more than 2 millimeters. This exceeds the typical film thickness of less than about 15 micrometers provided by non-thermal spraying processes. In addition, with thermal spraying, the feedstock can be applied as a dispersion of boride and/or carbide in an oxide matrix, rather than as a film.

The use of additional heating is not required, and laborious "painting" of the feedstock onto the surface of parts is also avoided. Coating application on a wide range of target surfaces is thus permitted, including heat-sensitive parts.

### INDUSTRIAL APPLICABILITY

The invention may be of use in the aerospace industry as well as in a wide range of other sectors, including, for example, production of steam and water turbines, brake and clutch discs, and textile mill devices such as thread guides. Any industry where wearability of surfaces is a consideration may benefit from the advantages taught herein. Deposition of coatings with high non-oxide content in an oxide matrix will permit the use of these abrasion resistant coatings at higher temperatures than is presently possible in many manufacturing sectors.

## Claims

1. A binder-free ceramic feedstock composition for thermal spraying on a surface of an article, the composition comprising:
an oxide ceramic powder and
a boride ceramic powder, a carbide ceramic powder or a combination thereof;
wherein the particle size of the boride ceramic powder, the carbide ceramic powder or their combination is in the range at about 10 to 106 micrometers and the composition comprises between approximately 1 to 85 vol.-% oxide ceramic powder.

2. The binder-free ceramic feedstock composition according to claim 1, wherein the particle size of the boride ceramic powder, the carbide ceramic powder or their combination is in the range of about 10 to 45 micrometers.

3. The binder-free ceramic feedstock composition according claim 1 to 2, wherein the particle size of the oxide ceramic powder is less than or equal to 45 micrometers.

4. The binder-free ceramic feedstock composition according to any one of claims 1 to 3, wherein the oxide ceramic powder is selected from the group consisting of silica, alumina, alumina-titania, zirconia, yttria-stabilized zirconia, magnesia-stabilized zirconia, ceria-stabilized zirconia, calcia-stabilized zirconia, scandia-stabilized zirconia, zirconia toughened alumina, alumina-zirconia, and a compound oxide.

5. The binder-free ceramic feedstock composition according to any one of claims 1 to 4, wherein the feedstock composition comprises the boride ceramic powder and the oxide ceramic powder.

6. The binder-free ceramic feedstock composition according to any one of claims 1 to 5, wherein the boride ceramic powder is selected from borides of elements from groups IVB, VB, VIB, VIIB, and VIIIB of the periodic table.

7. The binder-free ceramic feedstock composition according to claim 6, wherein the boride ceramic powder is selected from the group consisting of titanium boride, zirconium boride, and hafnium boride.

8. The binder-free ceramic feedstock composition according to any one of claims 1 to 4, wherein the feedstock composition comprises the carbide ceramic powder and the oxide ceramic powder.

9. The binder-free ceramic feedstock composition according to any one of claims 1 to 4 or 8, wherein the carbide ceramic powder is selected from carbides of elements from groups IVB, VB, VIB, VIIB of the periodic table and iron carbide.

10. The binder-free ceramic feedstock composition according to claim 9, wherein the carbide ceramic is selected from the group consisting of silicon carbide, chromium carbide, and boron carbide.

11. A method of preparing a binder-free ceramic feedstock for thermal spraying on a surface to create a ceramic coating thereon, the method comprising:
mixing an oxide ceramic powder with a boride ceramic powder, a carbide ceramic powder, or a combination thereof;
wherein the particle size of the boride ceramic powder, the carbide ceramic powder, or their combination is in the range of about 10 to 106 micrometers and the composition comprises between approximately 1 to 85 vol.-% oxide ceramic powder.

12. The method of preparing a binder-free ceramic feedstock according to claim 11, wherein the particle size of the boride ceramic powder, the carbide ceramic powder or their combination is in the range of about 10 to 45 micrometers.

13. The method of preparing a binder-free ceramic feedstock according to claims 11 or 12, wherein the particle size of the oxide ceramic powder is less than or equal to 45 micrometers.

14. The method of preparing a binder-free ceramic feedstock according to any one of claims 11 to 13, wherein the oxide ceramic powder is selected from the group consisting of silica, alumina, alumina-titania, zirconia, yttria-stabilized zirconia, magnesia-stabilized zirconia, ceria-stabilized zirconia, calcia-stabilized zirconia, scandia-stabilized zirconia, zirconia toughened alumina, alumina-zirconia, and a compound oxide.

15. The method of preparing a binder-free ceramic feedstock according to any one of claims 11 to 14, wherein the feedstock composition comprises the boride ceramic powder and the oxide ceramic powder.

16. The method of preparing a binder-free ceramic feedstock according to any one of claims 11 to 15, wherein the boride ceramic powder is selected from borides of elements from groups IVB, VB, VIB, VIIB, and VIIIB of the periodic table.

17. The method of preparing a binder-free ceramic feedstock according to claim 16, wherein the boride ceramic powder is selected from the group consisting of titanium boride, zirconium boride, and hafnium boride.

18. The method of preparing a binder-free ceramic feedstock according to any one of claims 11 to 14, wherein the feedstock composition comprises the carbide ceramic powder and the oxide ceramic powder.

19. The method of preparing a binder-free ceramic feedstock according to any one of claims 11 to 14 or 18, wherein the carbide ceramic powder is selected from carbides of elements from groups IVB, VB, VIB, VIIB of the periodic table and iron carbide.

20. The method of preparing a binder-free ceramic feedstock according to claim 19, wherein the carbide ceramic is selected from the group consisting of silicon carbide, chromium carbide, and boron carbide.

21. The method of preparing a binder-free ceramic feedstock according to claim 11, wherein the mixing of the oxide ceramic powder, as a first oxide ceramic powder, with the boride carbide ceramic powder, the carbide ceramic powder, or a combination thereof provides an oxide content between approximately 1 to 25 vol.-% and is followed by
mixing with one or more additional oxide ceramic powders to provide a final oxide content up to 85 vol.-%;

22. The method of preparing a binder-free ceramic feedstock according to claim 21, wherein the additional oxide ceramic powder is chemically different than the first oxide ceramic powder.

23. The method of preparing a binder-free ceramic feedstock according to any one of claims 11 to 20, wherein the step of mixing is a dry mixing step.

24. The method of preparing a binder-free ceramic feedstock according to any one of claims 11 to 20, wherein the step of mixing is wet mixing followed by drying.

25. The method of preparing a binder-free ceramic feedstock according to claim 21 or 22, wherein the steps of mixing are dry mixing steps.

26. The method of preparing a binder-free ceramic feedstock according to claim 21 or 22, wherein the steps of mixing are wet mixing followed by drying.

27. The method of preparing a binder-free ceramic feedstock according to claim 24 or 26, wherein the wet mixing is effected by adding water to said mixture to form a slurry.

28. The method of preparing a binder-free ceramic feedstock according to any one of claims 11 to 27, wherein the final oxide content of said oxide ceramic powder is between approximately 30 to 60 vol.-%.

29. The method of preparing a binder-free ceramic feedstock according to any one of claims 11 to 28, wherein the particle size of the binder-free ceramic feedstock is in the range of about 30 to about 108 micrometers.

30. A method for applying a ceramic coating on a surface of an article, the method comprising:
preparing the binder-free ceramic feedstock by a method according to any one of claims 11 to 29; and,
thermally spraying the binder-free ceramic feedstock onto the surface of the article to form a coating thereon.

31. A method for applying a ceramic coating on a surface of an article, the method comprising:
preparing the binder-free ceramic feedstock by a method according to any one of claims 11 to 29;
mixing the binder-free ceramic feedstock with a second oxide ceramic powder to form a secondary feedstock; and,
thermally spraying the secondary feedstock onto the surface of the article to form a coating thereon.

32. The method for applying a ceramic coating according to claim 31, wherein the step of mixing the binder-free ceramic feedstock with a second oxide ceramic powder and the step of thermally spraying are performed simultaneously.

33. A thermal-spray coated article comprising a substrate and a coating applied thereto, wherein the coating comprising the binder-free ceramic feedstock according to any one of claims 1 to 10 and at least 15 vol.-% of at least one of the boride ceramic and the carbide ceramic.

34. The article according to claim 33, wherein the coating is applied by a method selected from the group consisting of atmospheric plasma spraying, flame combustion spraying, and low pressure or vacuum plasma spraying.

## Patentansprüche

1. Bindemittelfreie keramische Ausgangszusammensetzung zum thermischen Sprühen auf eine Oberfläche eines Gegenstands, wobei die Zusammensetzung enthält:
ein Oxidkeramikpulver und
ein Boridkeramikpulver, ein Carbidkeramikpulver oder eine Kombination davon;
wobei die Teilchengröße des Boridkeramikpulvers, des Carbidkeramikpulvers oder deren Kombination in dem Bereich von etwa 10 bis 106 Mikrometer liegt, und die Zusammensetzung Oxidkeramikpulver von etwa 1 bis 85 Vol.-% enthält.

2. Bindemittelfreie keramische Ausgangszusammensetzung nach Anspruch 1, wobei die Teilchengröße des Boridkeramikpulvers, des Carbidkeramikpulvers oder deren Kombination in dem Bereich von etwa 10 bis 45 Mikrometer liegt.

3. Bindemittelfreie keramische Ausgangszusammensetzung nach Anspruch 1 bis 2, wobei die Teilchengröße des Oxidkeramikpulvers weniger als oder gleich 45 Mikrometer beträgt.

4. Bindemittelfreie keramische Ausgangszusammensetzung nach einem der Ansprüche 1 bis 3,
wobei das Oxidkeramikpulver ausgewählt ist aus der Gruppe bestehend aus Siliciumoxid, Aluminiumoxid, Aluminiumoxid-Titanoxid, Zirkoniumoxid, Yttriumoxid stabilisiertes Zirkoniumoxid, Magnesiumoxid stabilisiertes Zirkoniumoxid, Peroxid stabilisiertes Zirkoniumoxid, Calciumoxid stabilisiertes Zirkoniumoxid, Scandiumoxid stabilisiertes Zirkoniumoxid, Zirkoniumoxid gehärtetes Aluminiumoxid, Aluminiumoxid-Zirkoniumoxid, und einem Verbundoxid.

5. Bindemittelfreie keramische Ausgangszusammensetzung nach einem der Ansprüche 1 bis 4,
wobei die Ausgangszusammensetzung das Boridkeramikpulver und das Oxidkeramikpulver enthält.

6. Bindemittelfreie keramische Ausgangszusammensetzung nach einem der Ansprüche 1 bis 5,
wobei das Boridkeramikpulver ausgewählt ist aus Boriden von Elementen der Gruppen IVB, VB, VIB, VIIB und VIIIB des Periodensystems.

7. Bindemittelfreie keramische Ausgangszusammensetzung nach Anspruch 6, wobei das Boridkeramikpulver ausgewählt ist aus der Gruppe bestehend aus Titanborid, Zirkoniumborid und Hafniumborid.

8. Bindemittelfreie keramische Ausgangszusammensetzung nach einem der Ansprüche 1 bis 4,
wobei die Ausgangszusammensetzung das Carbidkeramikpulver und das Oxidkeramikpulver enthält.

9. Bindemittelfreie keramische Ausgangszusammensetzung nach einem der Ansprüche 1 bis 4 oder 8,
wobei das Carbidkeramikpulver ausgewählt ist aus Carbiden von Elementen der Gruppen IVB, VB, VIB, VIIB des Periodensystems und Eisencarbid.

10. Bindemittelfreie keramische Ausgangszusammensetzung nach Anspruch 9,
wobei die Carbidkeramik ausgewählt ist aus der Gruppe bestehend aus Siliciumcarbid, Chromcarbid und Borcarbid.

11. Verfahren zum Herstellen eines bindemittelfreien keramischen Ausgangsmaterials zum thermischen Sprühen auf eine Oberfläche zum Erzeugen einer darauf angeordneten keramischen Beschichtung, wobei das Verfahren aufweist:
Mischen eines Oxidkeramikpulvers mit einem Boridkeramikpulver, einem Carbidkeramikpulver oder einer Kombination davon;
wobei die Teilchengröße des Boridkeramikpulvers, des Carbidkeramikpulvers oder deren Kombination in dem Bereich von etwa 10 bis 106 Mikrometer liegt, und die Zusammensetzung etwa 1 bis 85 Vol.-% Oxidkeramikpulver enthält.

12. Verfahren zum Herstellen eines bindemittelfreien keramischen Ausgangsmaterials nach Anspruch 11,
wobei die Teilchengröße des Boridkeramikpulvers, des Carbidkeramikpulvers oder deren Kombination in dem Bereich von etwa 10 bis 45 Mikrometer liegt.

13. Verfahren zum Herstellen eines bindemittelfreien keramischen Ausgangsmaterials nach Anspruch 11 oder 12,
wobei die Teilchengröße des Oxidkeramikpulvers weniger als oder gleich 45 Mikrometer beträgt.

14. Verfahren zum Herstellen eines bindemittelfreien keramischen Ausgangsmaterials nach einem der Ansprüche 11 bis 13,
wobei das Oxidkeramikpulver ausgewählt ist aus der Gruppe bestehend aus Siliciumoxid, Aluminiumoxid, Aluminiumoxid-Titanoxid, Zirkoniumoxid, Yttriumoxid stabilisiertes Zirkoniumoxid, Magnesiumoxid stabilisiertes Zirkoniumoxid, Peroxid stabilisiertes Zirkoniumoxid, Calciumoxid stabilisiertes Zirkoniumoxid, Scandiumoxid stabilisiertes Zirkoniumoxid, Zirkoniumoxid gehärtetes Aluminiumoxid, Aluminiumoxid-Zirkoniumoxid, und einem Verbundoxid.

15. Verfahren zum Herstellen eines bindemittelfreien keramischen Ausgangsmaterials nach einem der Ansprüche 11 bis 14,
wobei die Ausgangszusammensetzung das Boridkeramikpulver und das Oxidkeramikpulver enthält.

16. Verfahren zum Herstellen eines bindemittelfreien keramischen Ausgangsmaterials nach einem der Ansprüche 11 bis 15,
wobei das Boridkeramikpulver ausgewählt ist aus Boriden von Elementen der Gruppen IVB, VB, VIB, VIIB und VIIIB des Periodensystems.

17. Verfahren zum Herstellen eines bindemittelfreien keramischen Ausgangsmaterials nach Anspruch 16,
wobei das Boridkeramikpulver ausgewählt ist aus der Gruppe bestehend aus Titanborid, Zirkoniumborid und Hafniumborid.

18. Verfahren zum Herstellen eines bindemittelfreien keramischen Ausgangsmaterials nach einem der Ansprüche 11 bis 14,
wobei die Ausgangszusammensetzung das Carbidkeramikpulver und das Oxidkeramikpulver enthält.

19. Verfahren zum Herstellen eines bindemittelfreien keramischen Ausgangsmaterials nach einem der Ansprüche 11 bis 14 oder 18,
wobei das Carbidkeramikpulver ausgewählt ist aus Carbiden der Elemente der Gruppen IVB, VB, VIB, VIIB des Periodensystems und Eisencarbid.

20. Verfahren zum Herstellen eines bindemittelfreien keramischen Ausgangsmaterials nach Anspruch 19,
wobei die Carbidkeramik ausgewählt ist aus der Gruppe bestehend aus Siliciumcarbid, Chromcarbid und Borcarbid.

21. Verfahren zum Herstellen eines bindemittelfreien keramischen Ausgangsmaterials nach Anspruch 11,
wobei das Mischen des Oxidkeramikpulvers, als ein erstes Oxidkeramikpulver, mit dem Boridcarbidkeramikpulver, dem Carbidkeramikpulver oder einer Kombination davon einen Oxidgehalt von etwa 1 bis 25 Vol.-% liefert und gefolgt wird durch
Mischen mit einem oder mehreren zusätzlichen Oxidkeramikpulvern, um einen endgültigen Oxidgehalt von bis zu 85 Vol.-% zu liefern.

22. Verfahren zum Herstellen eines bindemittelfreien keramischen Ausgangsmaterials nach Anspruch 21,
wobei das zusätzlich Oxidkeramikpulver von dem ersten Oxidkeramikpulvergemisch verschieden ist.

23. Verfahren zum Herstellen eines bindemittelfreien keramischen Ausgangsmaterials nach einem der Ansprüche 11 bis 20,
wobei der Schritt des Mischens ein Trockenmischschritt ist.

24. Verfahren zum Herstellen eines bindemittelfreien keramischen Ausgangsmaterials nach einem der Ansprüche 11 bis 20,
wobei der Schritt des Mischens ein Nassmischen gefolgt von Trocknen ist.

25. Verfahren zum Herstellen eines bindemittelfreien keramischen Ausgangsmaterials nach Anspruch 21 oder 22,
wobei die Schritte des Mischens Trockenmischschritte sind.

26. Verfahren zum Herstellen eines bindemittelfreien keramischen Ausgangsmaterials nach Anspruch 21 oder 22,
wobei die Schritte des Mischens ein Nassmischen gefolgt von Trocknen sind.

27. Verfahren zum Herstellen eines bindemittelfreien keramischen Ausgangsmaterials nach Anspruch 24 oder 26,
wobei das Nassmischen durch Hinzufügen von Wasser zu der Mischung bewirkt wird, um eine Aufschlämmung zu erhalten.

28. Verfahren zum Herstellen eines bindemittelfreien keramischen Ausgangsmaterials nach einem der Ansprüche 11 bis 27,
wobei der endgültige Oxidgehalt des Oxidkeramikpulvers etwa 30 bis 60 Vol.-% beträgt.

29. Verfahren zum Herstellen eines bindemittelfreien keramischen Ausgangsmaterials nach einem der Ansprüche 11 bis 28,
wobei die Teilchengröße des bindemittelfreien keramischen Ausgangsmaterials in dem Bereich von etwa 30 bis etwa 108 Mikrometer liegt.

30. Verfahren zum Aufbringen einer keramischen Beschichtung auf eine Oberfläche eines Gegenstandes, wobei das Verfahren aufweist:
Herstellen des bindemittelfreien keramischen Ausgangsmaterials durch ein Verfahren nach einem der Ansprüche 11 bis 29; und
thermisches Sprühen des bindemittelfreien keramischen Ausgangsmaterials auf die Oberfläche des Gegenstandes, um eine Beschichtung darauf zu bilden.

31. Verfahren zum Aufbringen einer keramischen Beschichtung auf eine Oberfläche eines Gegenstandes, wobei das Verfahren aufweist:
Herstellen des bindemittelfreien keramischen Ausgangsmaterials durch ein Verfahren nach einem der Ansprüche 11 bis 29;
Mischen des bindemittelfreien keramischen Ausgangsmaterials mit einem zweiten Oxidkeramikpulver, um ein sekundäres Ausgangsmaterial zu bilden; und thermisches Sprühen des sekundären Ausgangsmaterials auf die Oberfläche des Gegenstandes, um eine Beschichtung darauf zu bilden.

32. Verfahren zum Aufbringen einer keramischen Beschichtung nach Anspruch 31, wobei der Schritt des Mischens des bindemittelfreien keramischen Ausgangsmaterials mit einem zweiten Oxidkeramikpulver und der Schritt des thermischen Sprühens gleichzeitig durchgeführt werden.

33. Gegenstand, der durch thermisches Sprühen beschichtet ist, mit einem Substrat und einer daran angebrachten Beschichtung,
wobei die Beschichtung das bindemittelfreie keramische Ausgangsmaterial nach einem der Ansprüche 1 bis 10 und zumindest 15 Vol.-% von zumindest einem der Boridkeramik und der Carbidkeramik enthält.

34. Gegenstand nach Anspruch 33,
wobei die Beschichtung durch ein Verfahren aufgebracht wird, das ausgewählt ist aus der Gruppe bestehend aus atmosphärischem Plasmaspritzen, Flammverbrennungssprühen und Niedrigdruck- oder Vakuumplasmasprühen.

## Revendications

1. Composition d'une charge d'alimentation de céramique sans liant destinée à une projection thermique sur une surface d'un article, la composition comprenant :
une poudre de céramique oxyde et
une poudre de céramique de borure, une poudre de céramique de carbure ou un mélange de celles-ci ;
dans laquelle la taille des particules de la poudre de céramique de borure, de la poudre de céramique de carbure ou de leur mélange est comprise dans une plage d'environ 10 à 106 micromètres, et la composition comprend approximativement entre 1 et 85 % en volume de poudre de céramique oxyde.

2. Composition d'une charge d'alimentation de céramique sans liant selon la revendication 1, dans laquelle la taille des particules de la poudre de céramique de borure, de la poudre de céramique de carbure ou de leur mélange est comprise dans une plage d'environ 10 à 45 micromètres.

3. Composition d'une charge d'alimentation de céramique sans liant selon la revendication 1 ou 2, dans laquelle la taille des particules de la poudre de céramique oxyde est inférieure ou égale à 45 micromètres.

4. Composition d'une charge d'alimentation de céramique sans liant selon l'une quelconque des revendications 1 à 3, dans laquelle la poudre de céramique oxyde est choisie dans le groupe se composant de la silice, l'alumine, l'alumine-titane, la zircone, la zircone stabilisée à l'oxyde d'yttrium, la zircone stabilisée à la magnésie, la zircone stabilisée à l'oxyde de cérium, la zircone stabilisée à l'oxyde de calcium, la zircone stabilisée à l'oxyde de scandium, l'alumine durcie à la zircone, l'alumine-zircone, et d'un oxyde mixte.

5. Composition d'une charge d'alimentation de céramique sans liant selon l'une quelconque des revendications 1 à 4, dans laquelle la composition de la charge d'alimentation comprend la poudre de céramique de borure et la poudre de céramique oxyde.

6. Composition d'une charge d'alimentation de céramique sans liant selon l'une quelconque des revendications 1 à 5, dans laquelle la poudre de céramique de borure est choisie parmi les borures des éléments des groupes IV B, V B, VI B, VII B et VIII B du tableau périodique.

7. Composition d'une charge d'alimentation de céramique sans liant selon la revendication 6, dans laquelle la poudre de céramique de borure est choisie dans le groupe se composant du borure de titane, du borure de zirconium et de borure d'hafnium.

8. Composition d'une charge d'alimentation de céramique sans liant selon l'une quelconque des revendications 1 à 4, dans laquelle la composition de la charge d'alimentation comprend la poudre de céramique de carbure et la poudre de céramique oxyde.

9. Composition d'une charge d'alimentation de céramique sans liant selon l'une quelconque des revendications 1 à 4 ou 8, dans laquelle la poudre de céramique de carbure est choisie parmi les carbures des éléments des groupes IV B, V B, VI B, VII B du tableau périodique et du carbure de fer.

10. Composition d'une charge d'alimentation de céramique sans liant selon la revendication 9, dans laquelle la céramique de carbure est choisie dans le groupe se composant du carbure de silicium, du carbure de chrome et du carbure de bore.

11. Procédé de préparation d'une charge d'alimentation de céramique sans liant destinée à une projection thermique sur une surface afin d'y créer un revêtement céramique, le procédé comprenant :
le mélange d'une poudre de céramique oxyde avec une poudre de céramique de borure, une poudre de céramique de carbure, ou un mélange de celles-ci ;
dans lequel la taille des particules de la poudre de céramique de borure, de la poudre de céramique de carbure ou de leur mélange est comprise dans une plage d'environ 10 à 106 micromètres, et la composition comprend approximativement entre 1 et 85 % en volume de poudre de céramique oxyde.

12. Procédé de préparation d'une charge d'alimentation de céramique sans liant selon la revendication 11, dans lequel la taille des particules de la poudre de céramique de borure, de la poudre de céramique de carbure ou de leur mélange est comprise dans une plage d'environ 10 à 45 micromètres.

13. Procédé de préparation d'une charge d'alimentation de céramique sans liant selon la revendication 11 ou 12, dans lequel la taille des particules de la poudre de céramique oxyde est inférieure ou égale à 45 micromètres.

14. Procédé de préparation d'une charge d'alimentation de céramique sans liant selon l'une quelconque des revendications 11 à 13, dans lequel la poudre de céramique oxyde est choisie dans le groupe se composant de la silice, l'alumine, l'alumine-titane, la zircone, la zircone stabilisée à l'oxyde d'yttrium, la zircone stabilisée à la magnésie, la zircone stabilisée à l'oxyde de cérium, la zircone stabilisée à l'oxyde de calcium, la zircone stabilisée à l'oxyde de scandium, l'alumine durcie à la zircone, l'alumine-zircone, et d'un oxyde mixte.

15. Procédé de préparation d'une charge d'alimentation de céramique sans liant selon l'une quelconque des revendications 11 à 14, dans lequel la composition de la charge d'alimentation comprend la poudre de céramique de borure et la poudre de céramique oxyde.

16. Procédé de préparation d'une charge d'alimentation de céramique sans liant selon l'une quelconque des revendications 11 à 15, dans lequel la poudre de céramique de borure est choisie parmi les borures des éléments des groupes IV B, V B, VI B, VII B et VIII B du tableau périodique.

17. Procédé de préparation d'une charge d'alimentation de céramique sans liant selon la revendication 16, dans lequel la poudre de céramique de borure est choisie dans le groupe se composant du borure de titane, du borure de zirconium et de borure d'hafnium.

18. Procédé de préparation d'une charge d'alimentation de céramique sans liant selon l'une quelconque des revendications 11 à 14, dans lequel la composition de la charge d'alimentation comprend la poudre de céramique de carbure et la poudre de céramique oxyde.

19. Procédé de préparation d'une charge d'alimentation de céramique sans liant selon l'une quelconque des revendications 11 à 14 ou 18, dans lequel la poudre de céramique de carbure est choisie parmi les carbures des éléments des groupes IV B, V B, VI B, VII B du tableau périodique et du carbure de fer.

20. Procédé de préparation d'une charge d'alimentation de céramique sans liant selon la revendication 19, dans lequel la céramique de carbure est choisie dans le groupe se composant du carbure de silicium, du carbure de chrome et du carbure de bore.

21. Procédé de préparation d'une charge d'alimentation de céramique sans liant selon la revendication 11, dans lequel le mélange de la poudre de céramique d'oxyde, comme première poudre de céramique d'oxyde, avec la poudre de céramique de borure, la poudre de céramique de carbure ou un mélange de celles-ci, assure une teneur en oxyde comprise approximativement entre 1 et 25 % en volume, et est suivi par le mélange d'une ou plusieurs poudres céramiques oxydes supplémentaires pour assurer une teneur allant jusqu'à 85 % en volume.

22. Procédé de préparation d'une charge d'alimentation de céramique sans liant selon la revendication 21, dans lequel la poudre céramique oxyde supplémentaire est chimiquement différente de la première poudre céramique oxyde.

23. Procédé de préparation d'une charge d'alimentation de céramique sans liant selon l'une quelconque des revendications 11 à 20, dans lequel l'étape de mélange est une étape de mélange à sec.

24. Procédé de préparation d'une charge d'alimentation de céramique sans liant selon l'une quelconque des revendications 11 à 20, dans lequel l'étape de mélange est un mélange humide suivi d'un séchage.

25. Procédé de préparation d'une charge d'alimentation de céramique sans liant selon la revendication 21 ou 22, dans lequel les étapes de mélange sont des étapes de mélange à sec.

26. Procédé de préparation d'une charge d'alimentation de céramique sans liant selon la revendication 21 ou 22, dans lequel les étapes de mélange sont un mélange humide suivi d'un séchage.

27. Procédé de préparation d'une charge d'alimentation de céramique sans liant selon la revendication 24 ou 26, dans lequel le mélange humide est effectué en ajoutant de l'eau audit mélange pour former une suspension épaisse.

28. Procédé de préparation d'une charge d'alimentation de céramique sans liant selon l'une quelconque des revendications 11 à 27, dans lequel la teneur finale en oxyde de ladite poudre céramique oxyde est comprise entre approximativement 30 et 60 % en volume.

29. Procédé de préparation d'une charge d'alimentation de céramique sans liant selon l'une quelconque des revendications 11 à 28, dans lequel la taille des particules de la charge d'alimentation de céramique sans liant est comprise dans une plage d'environ 30 à environ 108 micromètres.

30. Procédé d'application d'un revêtement céramique sur une surface d'un article, le procédé comprenant :
la préparation d'une charge d'alimentation de céramique sans liant par un procédé selon l'une quelconque des revendications 11 à 29 ; et
la projection thermique de la charge d'alimentation de céramique sans liant sur la surface de l'article pour former un revêtement sur celui-ci.

31. Procédé d'application d'un revêtement céramique sur une surface d'un article, le procédé comprenant :
la préparation d'une charge d'alimentation de céramique sans liant par un procédé selon l'une quelconque des revendications 11 à 29 ;
le mélange de la charge d'alimentation de céramique sans liant avec une deuxième poudre de céramique oxyde pour former une charge d'alimentation secondaire ; et
la projection thermique de la charge d'alimentation secondaire sur la surface de l'article pour former un revêtement sur celui-ci.

32. Procédé d'application d'un revêtement céramique selon la revendication 31, dans lequel l'étape de mélange de la charge d'alimentation de céramique sans liant avec une deuxième poudre de céramique oxyde et l'étape de projection thermique sont effectuées simultanément.

33. Article enduit par projection thermique, comprenant un substrat et un revêtement appliqué sur celui-ci, dans lequel le revêtement comprend la charge d'alimentation de céramique sans liant selon l'une quelconque des revendications 1 à 10 et au moins 15 % en volume d'au moins l'une d'entre la céramique de borure et la céramique de carbure.

34. Article selon la revendication 33, dans lequel le revêtement est appliqué par un procédé choisi dans le groupe se composant de la projection plasma sous pression atmosphérique, de la projection à la flamme, et de la projection plasma sous haute pression ou sous vide.
